# EUROPEAN PATENT APPLICATION

(11) **EP 3 722 972 A1**
(43) Date of publication of application: **14.10.2020**
(21) Application number: 18884976.4
(22) Date of filing: 28.09.2018
(51) Int. Cl.: G06F 16/951, G06F 16/901, G06Q 50/20

(54) **INFORMATION PROCESSING DEVICE, INFORMATION PROCESSING METHOD, AND PROGRAM**

(30) Priority: 04.12.2017 JP 2017232513
(71) Applicant: Sony Corporation, Tokyo 108-0075 (JP)
(72) Inventor: TAKAHASHI, Koki, Tokyo 141-0031 (JP); LAWRENSON, Matthew, 1015 Lausanne (CH); WRIGHT, Christopher, London SE19 3HF (GB); VAN DEN BERG, Jan Jasper, 1015 Lausanne (CH)
(74) Representative: MFG Patentanwälte Meyer-Wildhagen Meggle-Freund Gerhard PartG mbB
(86) International application number: PCT/JP2018/036390
(87) International publication number: WO 2019/111509

(57) **Abstract**

It is possible to provide more suitable online information to a user in order to achieve an arbitrary purpose.

There is provided an information processing apparatus including: an acquiring unit that acquires information regarding an arbitrary purpose and history information of a user registered in a P2P database; and a control unit that controls provision of online information to the user on the basis of the information regarding the purpose and the history information.

## Description

### TECHNICAL FIELD

The present disclosure relates to an information processing apparatus, an information processing method, and a program.

### BACKGROUND ART

In recent years, a service that uses a peer-to-peer database including blockchain data disclosed in Non-Patent Document 1 has been actively developed. Examples of such a service can include Bitcoin of Non-Patent Document 2, and the like, which uses blockchain data for exchange of a virtual currency. In the service that uses the peer-to-peer database including the blockchain data, it is possible to prevent tampering and the like of data managed in the peer-to-peer database to secure authenticity of the data.

Now, here, with the advancement of technology in recent years, the number of users of online learning has increased. The online learning has been provided by various institutions and organizations, and has covered a wide range of topics and fields. For example, many famous universities including Massachusetts Institute of Technology, Harvard University, and Oxford University have provided a massive open online course (MOOC) that can perform the online learning for free or at a low price. A user can improve his/her ability by selecting a desired learning course and performing online learning in the MOOC.

Furthermore, from another viewpoint, with an increase in the number of users of the Internet, the number of users of social media including an SNS has continuously increased in recent years. Therefore, the social media have functioned as one of main means when the users access various types of information. For example, recent research has shown that 44% of Americans are acquiring news information using Facebook (registered trademark) and the social media is replacing television broadcasting, particularly, in a case of younger users (for example, 18 to 24-years-old users). In the future, this tendency is expected to become even more prominent. Therefore, online information arranged on the social media has the potential to be used as teaching materials for the online learning.

### CITATION LIST

### NON-PATENT DOCUMENT

Non-Patent Document 1: Melanie Swan, "Blockchain", (U.S.), O'Reilly Media, January 22, 2015
Non-Patent Document 2: Andreas M. Antonopoulos, "Mastering Bitcoin", (U.S.), O'Reilly Media, December 1, 2014

### SUMMARY OF THE INVENTION

### PROBLEMS TO BE SOLVED BY THE INVENTION

Here, in a case where the online information is used as a teaching material for the online learning, there is a possibility that online information suitable for achieving a purpose of the online learning will not be provided to the user. For example, it is not easy for the user to search for online information suitable as a teaching material among a lot of online information.

Therefore, the present disclosure has been made in view of the problems described above, and an object of the present disclosure is to provide a new and improved information processing apparatus, information processing method, and program capable of providing more suitable online information to a user in order to achieve an arbitrary purpose (including a learning purpose).

### SOLUTIONS TO PROBLEMS

According to the present disclosure, there is provided an information processing apparatus including: an acquiring unit that acquires information regarding an arbitrary purpose and history information of a user registered in a P2P database; and a control unit that controls provision of online information to the user on the basis of the information regarding the purpose and the history information.

Furthermore, according to the present disclosure, there is provided an information processing method executed by a computer, including: acquiring information regarding an arbitrary purpose and history information of a user registered in a P2P database; and controlling provision of online information to the user on the basis of the information regarding the purpose and the history information.

Furthermore, according to the present disclosure, there is provided a program for causing a computer to realize: acquiring information regarding an arbitrary purpose and history information of a user registered in a P2P database; and controlling provision of online information to the user on the basis of the information regarding the purpose and the history information.

### EFFECTS OF THE INVENTION

As described above, according to the present disclosure, it is possible to provide more suitable online information to the user in order to achieve the arbitrary purpose.

Note that the effect described above is not necessarily restrictive, and any effect set forth in the present specification or other effects that can be grasped from the present specification may be accomplished together with or instead of the effect described above.

### BRIEF DESCRIPTION OF DRAWINGS

Fig. 1 is a diagram illustrating an overview of blockchain data, which is a kind of peer-to-peer database.
Fig. 2 is a diagram illustrating an overview of blockchain data, which is a kind of peer-to-peer database.
Fig. 3 is a diagram illustrating an overview of blockchain data, which is a kind of peer-to-peer database.
Fig. 4 is a diagram illustrating a configuration example of an information processing system according to the present embodiment.
Fig. 5 is a block diagram showing a functional configuration example of an information providing apparatus 100 according to the present embodiment.
Fig. 6 is a block diagram showing a functional configuration example of a node apparatus 200 according to the present embodiment.
Fig. 7 is a block diagram showing a functional configuration example of a user apparatus 300 according to the present embodiment.
Fig. 8 is a flowchart showing an example of a flow of provision processing of online information.
Fig. 9 is a block diagram showing an example of a hardware configuration of an information processing apparatus 900 that realizes the information providing apparatus 100, the node apparatus 200, or the user apparatus 300 according to the present embodiment.

### MODE FOR CARRYING OUT THE INVENTION

Hereinafter, preferred embodiments of the present disclosure will be described in detail with reference to the accompanying drawings. Note that, in the present specification and the drawings, components having substantially the same functional configuration will be denoted by the same reference numerals and an overlapping description will be omitted.

Note that a description will be given in the following order.
1. Overview of peer-to-peer database
2. Embodiment
   2.1. Overview
   2.2. System configuration example
   2.3. Functional configuration example of information providing apparatus 100
   2.4. Functional configuration example of node apparatus 200
   2.5. Functional configuration example of user apparatus 300
   2.6. Flow of processing
3. Modification
   3.1. Application to system other than learning system
   3.2. Provision of online information by P2P database program 222
4. Hardware configuration example
5. Summary

### <1. Overview of peer-to-peer database>

Before describing an embodiment of the present disclosure, an overview of a peer-to-peer database will be first described.

In an information processing system according to the present embodiment, a distributed peer-to-peer database distributed in a peer-to-peer network is used. Note that the peer-to-peer network may be called a peer-to-peer distributed file system. Hereinafter, the peer-to-peer network may be referred to as a "P2P network", and the peer-to-peer database may be referred to as a "P2P database". As an example of the P2P database, blockchain data distributed in the P2P network may be used. Therefore, first, an overview of a blockchain system will be described as an example.

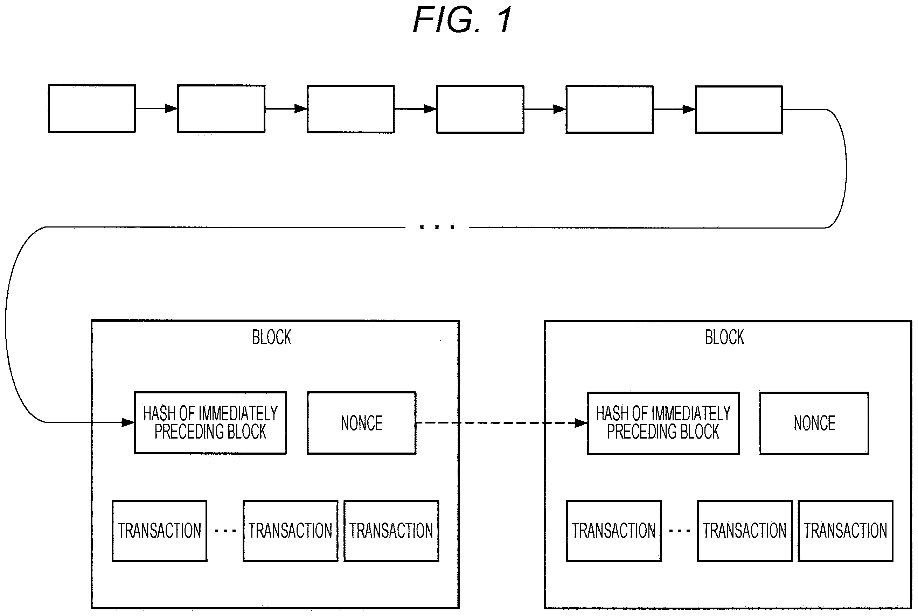

As shown in Fig. 1, blockchain data is data including a plurality of blocks connected to each other as if the plurality of blocks was a chain. In each block, one or two or more target data can be stored as a transaction.

Examples of the blockchain data can include blockchain data used for exchange of data of a virtual currency such as Bitcoin and the like. The blockchain data used for exchange of the data of the virtual currency includes, for example, a hash of the immediately preceding block and a value called nonce. The hash of the immediately preceding block is information used to judge whether or not a block is a "correct block" that is correctly connected to the immediately preceding block. The nonce is information used in order to prevent spoofing in authentication using the hash, and tampering is prevented by using the nonce. Examples of the nonce can include a character string, a numeric string, data indicating a combination of the character string and the numeric string, or the like.

Furthermore, in the blockchain data, an electronic signature using an encryption key is given to data of each transaction to prevent spoofing. Furthermore, the data of each transaction is disclosed and shared throughout the P2P network. Note that the data of each transaction may be encrypted using the encryption key.

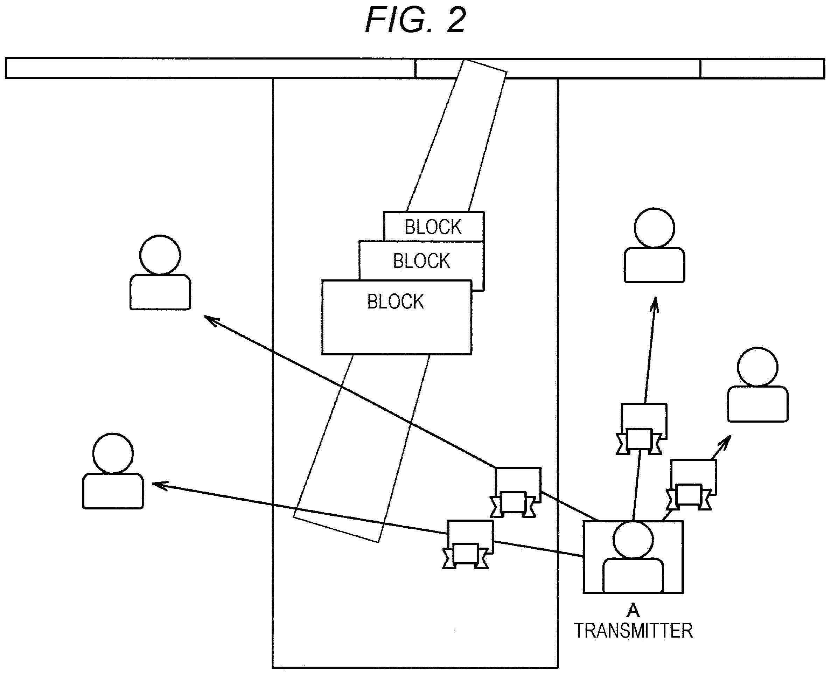

Fig. 2 is a diagram showing a state in which target data is registered by user A in the blockchain system. User A electronically signs the target data to be registered in the blockchain data using private key of user A. Then, user A broadcasts a transaction including the electronically signed target data on the P2P network. Therefore, it is secured that an owner of the target data is user A.

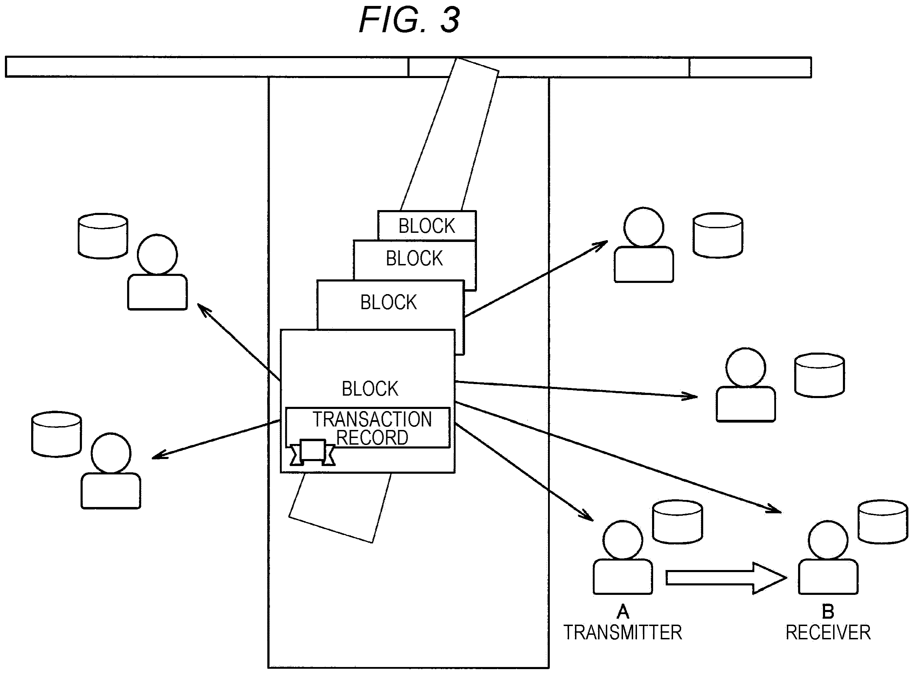

Fig. 3 is a diagram showing a state in which the target data is transferred from user A to user B in the blockchain system. User A performs an electronic signature using the private key of user A in the transaction, and includes a public key of user B in the transaction. Therefore, it is indicated that the target data has been transferred from user A to user B. Furthermore, user B may acquire a public key of user A from user A to acquire the electronically signed or encrypted target data, in the transaction of the target data.

Furthermore, in the blockchain system, for example, by using sidechain technology, it is possible to include other target data different from a virtual currency in blockchain data used for exchange of data of an existing virtual currency, such as blockchain data of Bitcoin, and the like.

### <2. Embodiment>

The overview of the peer-to-peer database has been described hereinabove. Next, an embodiment of the present disclosure will be described.

### (2.1. Overview)

First, an overview of the present disclosure will be described.

As described above, with the advancement of technology in recent years, the number of users of online learning has increased. The online learning has been provided by various institutions and organizations, and has covered a wide range of topics and fields.

Furthermore, from another viewpoint, with an increase in the number of users of the Internet, the number of users of social media including an SNS has continuously increased in recent years. Therefore, the social media have functioned as one of main means when the users access various types of information. Therefore, online information arranged on the social media has the potential to be used as teaching materials for the online learning.

Here, as described above, in a case where the online information is used as a teaching material for the online learning, there is a possibility that online information suitable for achieving a purpose of the online learning will not be provided to the user. For example, it is not easy for the user to search for online information suitable as a teaching material among a lot of online information. Furthermore, it takes a considerable amount of time to perform the search. Moreover, in a case where the user does not possess prior knowledge necessary to understand online information, there is a possibility that the user cannot understand the online information well and will feel stressed. Furthermore, in a case where a content that is the same as (or similar to) a content learned by the user in the past is included in the online information, there is a possibility that the user will feel stressed about learning again the content that he/she has already understood.

Furthermore, the more the topics to learn, the easier it is for the user to forget past learning contents regarding another topic while learning a new topic. Therefore, the user is required to spontaneously review the past learning contents.

Moreover, there is a case where it is difficult for the user to continuously spend time on learning depending on circumstances such as work, home, or the like. In other words, as described above, there is a case where it is difficult for the user to search for the suitable online information for himself/herself, to spontaneously review the past learning contents, or the like.

The present disclosers have invented the present disclosure in view of the circumstance described above. An information processing system according to the present disclosure can control provision of online information to a user on the basis of information regarding an arbitrary purpose (hereinafter, referred to as "purpose information"), information regarding a method of achieving the arbitrary purpose (hereinafter, referred to as "method information"), and history information of a user.

That is, the information processing system according to the present disclosure can control provision of online information used for learning on the basis of purpose information regarding learning purpose of the user, method information regarding a method of achieving the learning purpose, and the history information of the user.

Here, the "learning purpose" includes a learning course provided by a massive open online course (MOOC), a learning course provided by an educational institution (for example, a university, a vocational school, or the like), a learning course provided by another association, or the like, but is not limited thereto. For example, the learning purpose may be an arbitrary thing including an arbitrary subject (for example, mathematics, physics, chemistry, biology, Japanese history, world history, English, or the like), an arbitrary category (for example, politics, economy, sports, entertainment, or the like), arbitrary technology (for example, communication technology, machine learning technology, or the like), or an arbitrary industry (for example, manufacturing industry, construction, beauty, service, or the like), or the like, that the user wants to learn.

Then, the "purpose information" regarding the learning purpose includes details or the like (for example, a topic, learning order, a schedule (for example, a learning day, a learning time or period, or the like), an instructor, a participation condition, a cost, or the like, of the learning course) of the learning course, but is not limited thereto. For example, the purpose information may be details or the like (for example, a topic, learning order, a schedule (for example, a learning day, a learning time or period, or the like), an instructor, a cost, or the like) of learning desired by the user (other than the learning course).

Furthermore, the "method information" regarding the method of achieving the learning purpose includes, for example, a kind (for example, iterative learning, intensive learning, distributed learning, mutual learning, individual learning, group learning, competence education, learning pathways, or the like) of learning method and details (for example, with respect to the repetitive learning, a repetition interval, a content of information to be repeated, or the like) of each learning method, but is not limited thereto.

Furthermore, the "history information" includes, for example, learning history information such as a learning achievement record (for example, a record regarding an examination result, an acquired credit, an acquired qualification, or the like) of the user, an activity record (for example, a record regarding a club activity, a student council activity, an attendance situation, or the like) of the user, and the like, registered by each educational institution (for example, a nursery school, a kindergarten, an elementary school, a junior high school, a high school, a university, a graduate school, a cram school, a preparatory school, a qualification school, or the like). Furthermore, the learning history information includes information regarding a content (for example, online information or the like learned by the user) learned by the user using the information processing system according to the present disclosure. Furthermore, the history information includes job history information (for example, an industry name, a company name, a job content, a job start date, a job end date, an official position, or the like), behavior history information (for example, a behavior content, a behavior date and time, a behavior place, a behavior frequency, or the like) (event information is also included in the behavior history information), or purchase history information (for example, an article name, an amount of money, a purchase date, or the like).

Furthermore, the "online information" refers to arbitrary information arranged online. For example, the online information includes arbitrary information (for example, news information, blog information, paper information, arbitrary information on social media, or the like) arranged on the Internet, but is not limited thereto. For example, the online information also includes arbitrary information arranged on an arbitrary network, such as an intranet.

The information processing system according to the present embodiment analyzes the purpose information, the method information, and the history information of the user, and generates one or two or more comparison point models, which are feature information of online information suitable for provision to the user. More specifically, the information processing system according to the present embodiment can recognize the details or the like of the learning course including the schedule or the like from the purpose information, can recognize the kind or the like of learning method from the method information, and can recognize a learning situation or the like of the user from the history information. Therefore, the information processing system according to the present embodiment can decide a content of the online information suitable for the provision to the user, the order or timing suitable for the provision, and the like, on the basis of these pieces of information.

Here, the "comparison point model" may include, for example, a category or a difficulty level of the online information suitable for the provision to the user. Note that the category of the online information includes a classification, a field, a kind, a genre, or the like, of the online information, and is not particularly limited as long as it can classify the online information. Furthermore, a format or the like of the difficulty level of the online information is not particularly limited as long as it is an index value indicating a difficulty level of understanding the online information. Furthermore, these are only examples, and the comparison point model may include any information as long as it is information regarding the online information. For example, the comparison point model may include information regarding a creator, a creation date and time, an arrangement place, a creation purpose, an included keyword, or the like, of the online information. Furthermore, the comparison point model may include information regarding importance of each of a plurality of these pieces of information.

The information processing system according to the present embodiment compares the comparison point model with a plurality of pieces of online information to extract online information having a feature that is similar to the comparison point model (has a similarity greater than a predetermined value) as online information for provision, and provides the extracted online information to the user.

Through the processing described above, the information processing system according to the present disclosure can provide more suitable online information to the user in order to achieve a purpose of the online learning. More specifically, the information processing system according to the present disclosure can provide more suitable online information to the user in more suitable order and timing without causing the user to search for suitable online information among a lot of online information. In other words, the information processing system according to the present disclosure can provide the online information to the user in synchronization with the schedule or the like of the learning course.

Furthermore, the information processing system according to the present disclosure can prevent online information about which prior knowledge is not possessed by the user from being provided, and prevent online information including a content that is the same as (or similar to) a content learned by the user in the past from being provided. In other words, the information processing system according to the present disclosure can cause the user to efficiently perform learning without causing the user to feel stressed by providing more suitable online information.

Furthermore, the information processing system according to the present disclosure can cause the user to review past learning contents at a predetermined timing depending on the kind (for example, the repetitive learning or the like) of learning method, and thus, the user does not need to consciously review the past learning contents for himself/herself.

Note that the present disclosure may be applied to any system other than the learning system as described above. In the present specification, a case where the present disclosure is applied to a learning system will first be described as an embodiment, and a case where the present disclosure is applied to another system will then be described as a modification.

### (2.2. System configuration example)

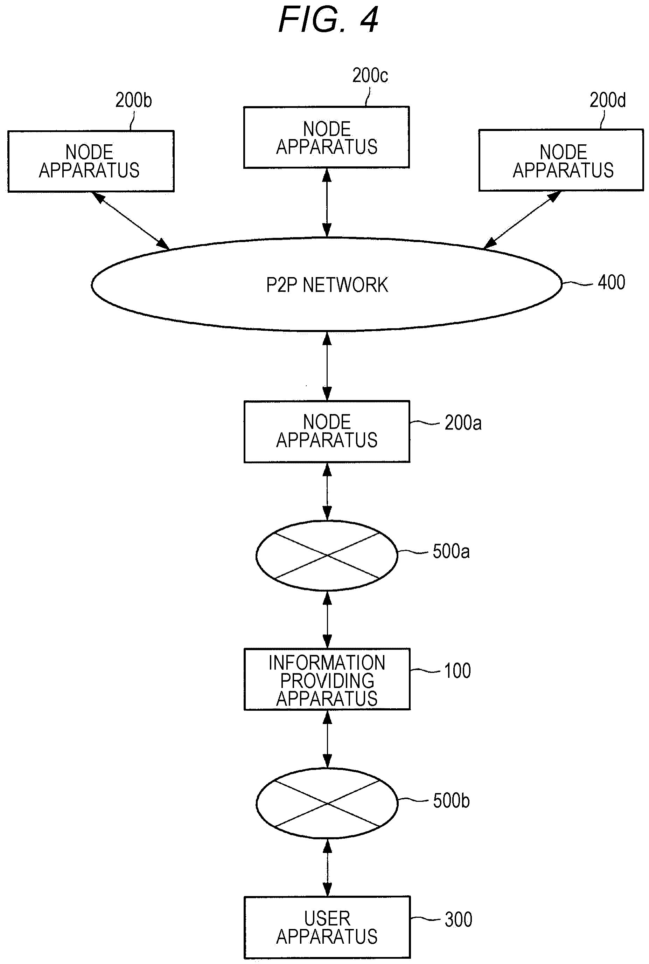

The overview of the present disclosure has been described hereinabove. Next, a configuration example of an information processing system according to an embodiment of the present disclosure will be described with reference to Fig. 4.

As shown in Fig. 4, the information processing system according to the present embodiment includes an information providing apparatus 100, a plurality of node apparatuses 200 (node apparatuses 200a to 200d in Fig. 4), and a user apparatus 300. Furthermore, the plurality of node apparatuses 200 is each connected to a P2P network 400. Moreover, the information providing apparatus 100 and the node apparatus 200a are connected to each other by a network 500a, and the information providing apparatus 100 and the user apparatus 300 are connected to each other by a network 500b. Note that a configuration of the information processing system according to the present embodiment is not limited to a configuration of Fig. 4. For example, the number of apparatuses constituting the information processing system may be changed as appropriate. Furthermore, the information providing apparatus 100 may be connected to the node apparatus 200 other than the node apparatus 200a.

### (Information providing apparatus 100)

The information providing apparatus 100 is an information processing apparatus that controls provision of online information to a user.

More specifically, first, the information providing apparatus 100 causes the user to set purpose information regarding learning purpose of the user and method information regarding a method of achieving the learning purpose. For example, the information providing apparatus 100 provides an interface through which the user can input the purpose information and the method information, to the user apparatus 300, and acquires the input information from the user apparatus 300. Note that a method of causing the user to set the purpose information and the method information is not limited to that described above. Furthermore, the purpose information and the method information may not be set directly by the user, and may be set indirectly by some method. For example, the method information may be determined in advance according to the learning course. The set purpose information and method information are registered in a P2P database provided in the node apparatus 200.

Then, the information providing apparatus 100 analyzes the purpose information, the method information, and history information of the user acquired from the P2P database, and generates a comparison point model, which is feature information of online information suitable for provision to the user.

Moreover, the information providing apparatus 100 acquires online information by a predetermined method. For example, the information providing apparatus 100 periodically acquires news information or the like disclosed on a predetermined site on the Internet. Note that this is only an example, and a method of acquiring the online information is not particularly limited. More specifically, the information providing apparatus 100 may acquire online information arranged in an arbitrary area on an arbitrary network at an arbitrary timing.

Then, the information providing apparatus 100 compares the acquired online information with the comparison point model, extracts online information having a feature that is similar to the comparison point model (has a similarity greater than a predetermined value) as online information for provision, and adds predetermined label information to the online information.

Thereafter, the information providing apparatus 100 provides the online information to which the label information is added, to the user apparatus 300, such that the user apparatus 300 provides the online information to the user. Through the series of processing described above, the information providing apparatus 100 can provide more suitable online information to the user in more suitable order and timing in order to achieve the learning purpose. In other words, the information providing apparatus 100 can provide the online information to the user in synchronization with the schedule or the like of the learning course.

Note that a kind of the information providing apparatus 100 is not particularly limited. For example, the information providing apparatus 100 may be an arbitrary apparatus such as a general-purpose computer, a personal computer (PC), a tablet PC, and the like.

### (Node apparatus 200)

The node apparatus 200 is an information processing apparatus that is connected to the P2P network 400 and holds the P2P database. Then, the node apparatus 200 performs registration of information in the P2P database and acquisition of information from the P2P database. With respect to the registration of the information, in a case where the purpose information and the method information are set, the node apparatus 200 receives these pieces of information from the information providing apparatus 100, and registers the received information in the P2P database. Furthermore, the node apparatus 200 receives the learning history information including the learning situation or the like (for example, a progress situation in the learning course, or the like) of the user from the information providing apparatus 100, and registers the learning history information in the P2P database. These pieces of information are registered in the P2P database to secure authenticity. Note that the information that the node apparatus 200 registers in the P2P database 221 and a case where the node apparatus 200 registers the information are not limited to those described above.

With respect to the acquisition of information, when providing the online information to the user, the node apparatus 200 acquires the purpose information, the method information, and the history information of the user from the P2P database, and provides the acquired information to the information providing apparatus 100. Note that the information that the node apparatus 200 acquires from the P2P database 221 and a case where the node apparatus 200 acquires the information are not limited to those described above.

Note that the node apparatus 200 basically uses a predetermined program (hereinafter, referred to as a "P2P database program") provided in the P2P database and executed on the P2P database, in a case where the node apparatus 200 registers the information in the P2P database, in a case where the node apparatus 200 acquires the information from the P2P database, and the like. By using the P2P database program, for example, various types of processing other than a transaction of a virtual currency such as Bitcoin and the like is realized according to a predetermined rule. By providing the P2P database program in the P2P database, a risk that the P2P database program will be illegally altered is reduced.

The P2P database program is a chain code in Hyperledger, but is not limited thereto. For example, the P2P database program may refer to a smart contract. Note that the node apparatus 200 may realize the acquisition of the information from the P2P database and the registration of the information in the P2P database, using a program other than the P2P database program as appropriate. Furthermore, similarly to the information providing apparatus 100, a kind of the node apparatus 200 is not particularly limited.

Furthermore, an example in which the plurality of node apparatuses 200 has the same function has been described in the present embodiment, but each node apparatus 200 may have different functions. For example, a node apparatus 200 (for example, an endorsing peer and the like) endorsing the registration of the information in the P2P database, a node apparatus 200 (for example, an ordering peer and the like) ordering each node apparatus 200 to perform registration after the endorsement, and a node apparatus 200 (for example, a committing peer and the like) registering the information in the P2P database may be provided.

### (P2P network 400)

The P2P network 400 is a network in which the P2P database is distributed. As described above, by connecting each node apparatus 200 to the P2P network 400, it is possible to update the P2P database while maintaining consistency with the P2P database held by the other node apparatuses 200.

Note that a kind of the P2P network 400 is not particularly limited. For example, the P2P network 400 may be any one of a consortium type operated by a plurality of organizations, a private type operated by a single organization, or a public type that does not specifically limit participants.

Note that a communication manner, a kind of line, and the like, used for the P2P network 400 are not particularly limited. For example, the P2P network 400 may be realized by a dedicated line network such as an Internet protocol-virtual private network (IP-VPN) and the like. Furthermore, the P2P network 400 may be realized by a public line network such as the Internet, a telephone line network, a satellite communication network, and the like, various local area networks (LANs) including Ethernet (registered trademark), a wide area network (WAN), and the like. Moreover, the P2P network 400 may be realized by a wireless communication network such as Wi-Fi (registered trademark), Bluetooth (registered trademark), and the like.

### (User apparatus 300)

The user apparatus 300 is an information processing apparatus that the user uses at the time of performing the online learning. More specifically, the user sets the purpose information regarding the learning purpose and the method information regarding the method of achieving the learning purpose by operating the user apparatus 300 at the time of starting the online learning. For example, the user apparatus 300 enables setting of these pieces of information by displaying an input screen for these pieces of information. Note that a method of setting the purpose information and the method information is not limited to that described above.

Furthermore, the user apparatus 300 is an apparatus that receives the online information provided from the information providing apparatus 100. For example, the user apparatus 300 receives the online information decided to be suitable for the provision to the user by the information providing apparatus 100, and displays the online information. Note that a method of providing the online information to the user is not limited to that described above. For example, the user apparatus 300 may provide the online information to the user by outputting the online information as voice. Note that, similarly to the information providing apparatus 100, a kind of the user apparatus 300 is not particularly limited.

Here, the user who uses the user apparatus 300 is basically assumed to be an individual, but is not limited to thereto. For example, the user includes an arbitrary organization or an arbitrary association (for example, a company, an association, a circle, and the like). The user is given an ID as identification information, and information regarding the user is managed in the P2P database.

Note that the user who sets the purpose information and the method information may be different from the user to whom the online information is provided. For example, a parent may set the purpose information and the method information, and cause a child to perform learning using the online information.

### (Network 500)

A network 500 is a network that connects the node apparatus 200 and the information providing apparatus 100 to each other and connects the information providing apparatus 100 and the user apparatus 300 to each other. Note that, similarly to the P2P network 400, a communication manner, a kind of line, and the like, used for the network 500 are not particularly limited.

The configuration example of the information processing system according to the present embodiment has been described hereinabove. Note that the configuration described above with reference to Fig. 4 is only an example, and a configuration of the information processing system according to the present embodiment is not limited to such an example. For example, some of the functions of the information providing apparatus 100 may be provided in the node apparatus 200 or the user apparatus 300. For example, software (for example, a WEB application and the like in which a predetermined application programming interface (API) is used) that provides some of the functions of the information providing apparatus 100 may be executed on the node apparatus 200 or the user apparatus 300. Furthermore, some of the functions of the node apparatus 200 may be provided in the information providing apparatus 100 or the user apparatus 300. In other words, the information providing apparatus 100 or the user apparatus 300 may participate in the P2P network 400 to hold the P2P database. The configuration of the information processing system according to the present embodiment can be flexibly modified according to specifications and operations.

### (2.3. Functional configuration example of information providing apparatus 100)

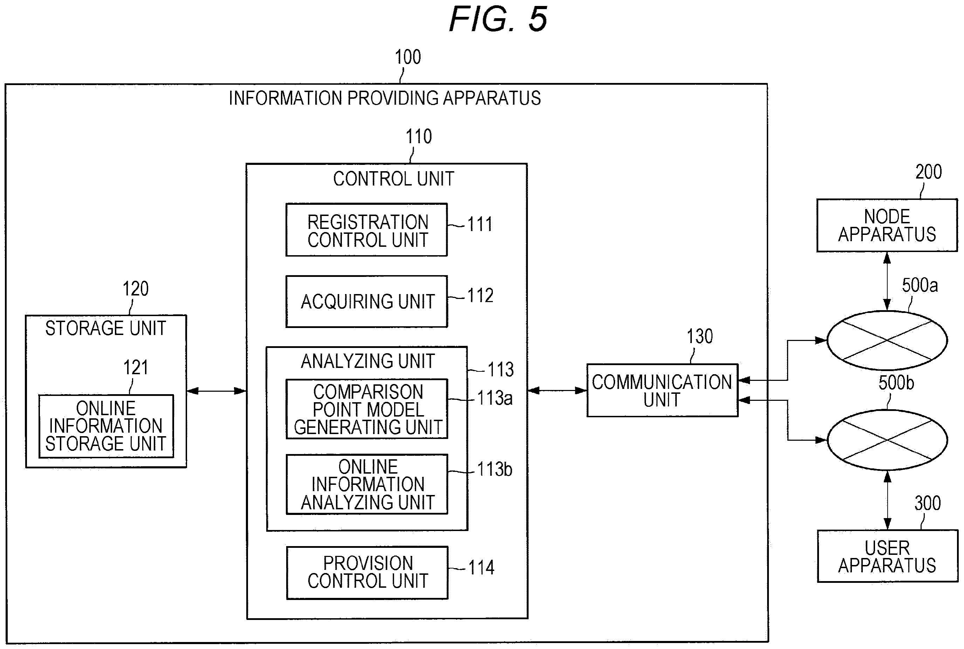

The configuration example of the information processing system according to the present embodiment has been described hereinabove. Next, a functional configuration example of the information providing apparatus 100 will be described with reference to Fig. 5.

As shown in Fig. 5, the information providing apparatus 100 includes a control unit 110, a storage unit 120, and a communication unit 130. Furthermore, the control unit 110 includes a registration control unit 111, an acquiring unit 112, an analyzing unit 113, and a provision control unit 114, and the analyzing unit 113 includes a comparison point model generating unit 113a and an online information analyzing unit 113b. Furthermore, the storage unit 120 includes an online information storage unit 121.

### (Control unit 110)

The control unit 110 is a functional configuration that comprehensively controls general processing performed by the information providing apparatus 100. For example, the control unit 110 can control start or stop of each configuration including an output unit (not shown) and the like such as a display, a speaker, or the like by generating a control signal. Note that a control content of the control unit 110 is not limited to that described above. For example, the control unit 110 may control processing generally performed in various servers, general-purpose computers, PCs, tablet PCs, and the like.

### (Registration control unit 111)

The registration control unit 111 is a functional configuration that controls registration of various types of information in the P2P database. For example, in a case where the user sets the purpose information and the method information using the user apparatus 300, the registration control unit 111 generates registration request information for requesting registration of these pieces of information provided from the user apparatus 300 in the P2P database, and transmits the registration request information to the node apparatus 200. Therefore, these pieces of information are registered in the P2P database.

Furthermore, the registration control unit 111 may control registration of the learning history information in the P2P database. For example, in a case where the user has performed the learning using the online information, the registration control unit 111 may generate registration request information for requesting registration of the learning history information (for example, the progress situation in the learning course, or the like) in the P2P database, and transmit the registration request information to the node apparatus 200. Note that the information whose registration in the P2P database is controlled is not limited to those described above. For example, the registration control unit 111 may control registration of the job history information, the behavior history information, the purchase history information, or the like, in the P2P database.

### (Acquiring unit 112)

The acquiring unit 112 is a functional configuration that acquires various types of information. For example, in a case where the online information is provided to the user, the acquiring unit 112 generates acquisition request information for requesting acquisition of the purpose information, the method information, and the history information of the user stored in the P2P database and transmits the acquisition request information to the node apparatus 200 to acquire these pieces of information. Then, the acquiring unit 112 provides these acquired information to the analyzing unit 113.

Furthermore, the acquiring unit 112 also acquires online information arranged on an arbitrary network. For example, the acquiring unit 112 acquires arbitrary online information (for example, news information, blog information, paper information, arbitrary information on social media, or the like) arranged on the Internet. Note that the online information acquired by the acquiring unit 112 is not limited to those described above. Furthermore, a timing at which the acquiring unit 112 acquires the online information is not particularly limited. For example, the acquiring unit 112 may periodically acquire the online information or may acquire the online information at a timing at which information indicating that the online information has been updated is obtained. Furthermore, an area on a network from which the acquiring unit 112 acquires the online information is not particularly limited. For example, the acquiring unit 112 may acquire the online information from a predetermined site. Furthermore, a content of the acquired online information, the timing at which the online information is acquired, and the area on the network from which the online information is acquired may be set by the user or may be determined according to the learning course. The acquiring unit 112 stores the acquired online information in the online information storage unit 121.

### (Analyzing unit 113)

The analyzing unit 113 is a functional configuration that includes the comparison point model generating unit 113a and the online information analyzing unit 113b, as described above, and outputs the online information suitable for the provision to the user by using each of these functional configurations. Details of functions of the comparison point model generating unit 113a and the online information analyzing unit 113b will be described later.

Note that a function of the analyzing unit 113 is not limited to that described above. For example, the analyzing unit 113 analyzes the purpose information, the method information, and the history information of the user, and may realize processing for notifying the user that the progress situation in the learning course is delayed as compared with the schedule of the learning course, by an arbitrary method, or processing for changing the schedule, or the like, in a case where the progress situation is delayed as compared with the schedule..

### (Comparison point model generating unit 113a)

The comparison point model generating unit 113a is a functional configuration that generates one or two or more comparison point models by analyzing the purpose information, the method information, and the history information of the user acquired by the acquiring unit 112.

More specifically, the comparison point model generating unit 113a can recognize the details or the like (for example, the topic, the learning order, the schedule (for example, the learning day, the learning time or period, or the like), the instructor, the participation condition, the cost, or the like, of the learning course) of the learning course by analyzing the purpose information. Furthermore, the comparison point model generating unit 113a can recognize the kind (for example, the iterative learning, the intensive learning, the distributed learning, the mutual learning, the individual learning, the group learning, the competence education, the learning pathways, or the like) of learning method and the details (for example, with respect to the repetitive learning, the repetition interval, the content of the information to be repeated, or the like) of the learning method by analyzing the method information.

Moreover, the comparison point model generating unit 113a can recognize the learning situation or the like (for example, the progress situation in the learning course, a quantity and a quality of knowledge about a learning content, or the like) of the user by analyzing the history information of the user. Note that the analyzed history information is not limited to the learning history information. More specifically, the comparison point model generating unit 113a may recognize the quantity and quality of knowledge about the learning content of the user by analyzing history information (for example, the job history information, the behavior history information, the purchase history information, or the like) other than the learning history information.

Then, the comparison point model generating unit 113a generates one or two or more comparison point models on the basis of an analysis result. For example, the comparison point model generating unit 113a may generate two or more comparison point models ordered so as to correspond to the learning order of the learning course. Therefore, the online information is provided in appropriate order, and it is thus possible to prevent the online information about which the prior knowledge is not possessed by the user from being provided, or the like.

Here, as described above, the information included in the comparison point model may be a category, a difficulty level, or the like of the online information suitable for the provision to the user, but is not limited thereto. The more the information included in the comparison point model, the higher the accuracy the online information provided to the user.

Note that the comparison point model generating unit 113a does not need to generate the comparison point model using all of the purpose information, the method information, and the history information. For example, the comparison point model generating unit 113a may generate the comparison point model on the basis of only the purpose information and the history information except for the method information. Furthermore, the comparison point model generating unit 113a may generate the comparison point model using only the purpose information.

Furthermore, the comparison point model generating unit 113a may generate the comparison point model using information other than the purpose information, the method information, and the history information. For example, the comparison point model generating unit 113a may generate the comparison point model using arbitrary information that can decide appropriateness as information used for learning, such as information regarding reliability of the online information, or the like. Therefore, the comparison point model generating unit 113a can prevent online information including erroneous information from being provided to the user. The information used for generating the comparison point model is not limited to those described above. The comparison point model generating unit 113a provides the generated comparison point model to the online information analyzing unit 113b.

### (Online information analyzing unit 113b)

The online information analyzing unit 113b is a functional configuration that extracts the online information suitable for the provision to the user using the comparison point model. More specifically, first, the online information analyzing unit 113b performs various analyses according to the kind of online information. For example, in a case where the online information includes text information, the online information analyzing unit 113b extracts words included in the online information by performing known text analysis processing, and extracts information (for example, a category, a difficulty level, or the like) that can be compared with the comparison point model on the basis of these words. In addition, in a case where the online information includes various types of information such as image information, moving image information, voice information, or the like, the online information analyzing unit 113b extracts information that can be compared with the comparison point model by performing known image analysis processing, moving image analysis processing, voice analysis processing, or the like. Note that in a case where the information that can be compared with the comparison point model is included in the online information, the online information analyzing unit 113b may omit analysis of the online information.

Then, the online information analyzing unit 113b compares the information extracted from the online information with the comparison point model to calculate a similarity between the extracted information and the comparison point model. Then, the online information analyzing unit 113b extracts online information having a feature whose similarity with the comparison point model is greater than a predetermined value as online information for provision, and adds label information to the online information. Note that the online information analyzing unit 113b may change the label information added to the online information according to a level of the similarity. Therefore, the online information analyzing unit 113b can cause online information having a higher similarity to be preferentially provided to the user.

Furthermore, the online information analyzing unit 113b may appropriately edit the online information. For example, the online information analyzing unit 113b may perform processing such as segmenting a group of parts having the feature whose similarity with the comparison point model is greater than the predetermined value from the online information, or the like. Therefore, more suitable online information can be provided to the user. The online information analyzing unit 113b provides the online information to which the label information is added, to the provision control unit 114.

### (Provision control unit 114)

The provision control unit 114 is a functional configuration that controls the provision of the online information to the user. Here, there are various methods of providing the online information to the user. For example, the provision control unit 114 may provide only online information having the highest similarity to the comparison point model to the user. Furthermore, the provision control unit 114 may provide all of the online information to which the label information is added (in other words, the online information having the feature whose similarity with the comparison point model is greater than the predetermined value) to the user. At that time, the provision control unit 114 may provide the online information in a state of indicating the similarity or may rearrange and provide the online information in descending order of the similarity. With these controls, the user can more efficiently perform the learning.

Furthermore, the provision control unit 114 may provide the online information to which the label information is added to the user in a state where the online information is mixed with online information to which the label information is not added. For example, when the user is accessing a news site on the Internet, the provision control unit 114 may provide news information to which the label information is added to the user in a state where the news information is mixed with news information to which the label information is not added. Therefore, the provision control unit 114 can cause the user to more naturally browse the online information to which the label information is added. Note that a control content regarding the provision of online information is not limited to that described above. For example, the provision control unit 114 may change the number of online information provided at a time for each user.

### (Storage unit 120)

The storage unit 120 is a functional configuration that stores various types of information. For example, the storage unit 120 stores the purpose information, the method information, the history information of the user, or the like, acquired from the P2P database by the acquiring unit 112. Furthermore, the storage unit 120 stores programs, parameters, or the like used by each functional configuration of the information providing apparatus 100. Note that a content of the information stored in the storage unit 120 is not limited to those described above.

### (Online information storage unit 121)

The online information storage unit 121 is a functional configuration that stores the online information acquired from the arbitrary network by the acquiring unit 112. More specifically, the online information storage unit 121 stores the arbitrary online information (for example, the news information, the blog information, the paper information, the arbitrary information on the social media, or the like) arranged on the Internet. Furthermore, the online information storage unit 121 may distinguish and manage the online information provided to the user and the online information that is not provided to the user, of the acquired online information. Therefore, the information providing apparatus 100 can grasp the learning situation or the like (for example, the progress situation in the learning course, or the like) of the user. Note that the online information stored in the online information storage unit 121 is not limited to those described above.

### (Communication unit 130)

The communication unit 130 is a functional configuration that controls various communications with the node apparatus 200 and the user apparatus 300. For example, when the online information for provision is determined, the communication unit 130 receives the purpose information, the method information, and the history information of the user from the node apparatus 200. Then, after the online information for provision is determined, the communication unit 130 transmits control information used for provision and the online information to the user apparatus 300. Furthermore, the communication unit 130 transmits the learning history information including the learning situation or the like (for example, the progress situation in the learning course, or the like) of the user to the node apparatus 200. Note that information transmitted and received by the communication unit 130 and a case where the communication unit 130 performs communication are not limited to those described above.

The functional configuration example of the information providing apparatus 100 has been described hereinabove. Note that the functional configuration described above with reference to Fig. 5 is only an example, and the functional configuration of the information providing apparatus 100 is not limited to such an example. For example, the information providing apparatus 100 may not necessarily include all of the functional configurations shown in Fig. 5. Furthermore, the functional configuration of the information providing apparatus 100 can be flexibly modified according to specifications or operations.

### (2.4. Functional configuration example of node apparatus 200)

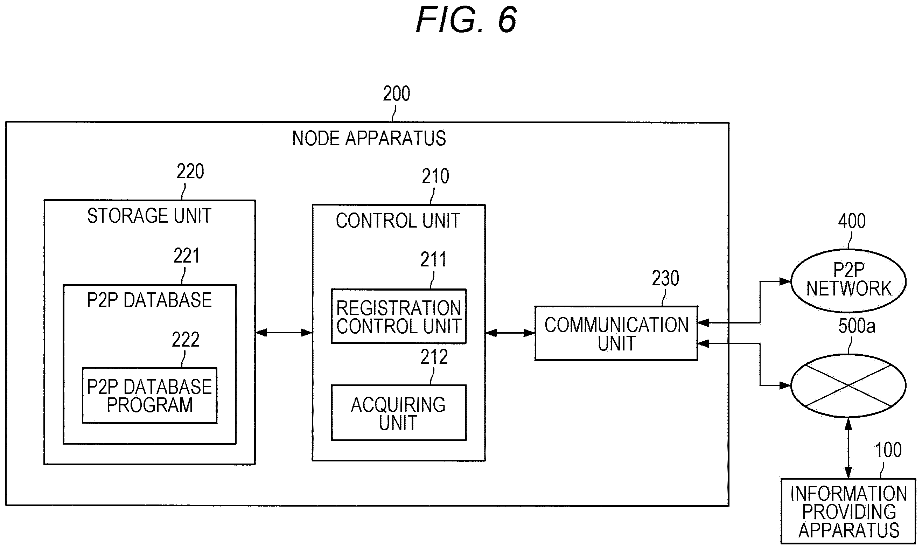

The functional configuration example of the information providing apparatus 100 has been described hereinabove. Next, a functional configuration example of the node apparatus 200 will be described with reference to Fig. 6.

As shown in Fig. 6, the node apparatus 200 includes a control unit 210, a storage unit 220, and a communication unit 230. Furthermore, the control unit 210 includes a registration control unit 211 and an acquiring unit 212. Furthermore, the storage unit 220 includes a P2P database 221, and a P2P database program 222 is provided in the P2P database 221.

### (Control unit 210)

The control unit 210 is a functional configuration that comprehensively controls general processing performed by the node apparatus 200. For example, the control unit 210 can control start or stop of each configuration including an output unit (not shown) and the like such as a display, a speaker, or the like by generating a control signal. Note that a control content of the control unit 210 is not limited to those described above. For example, the control unit 210 may control processing generally performed in various servers, general-purpose computers, PCs, tablet PCs, and the like.

### (Registration control unit 211)

The registration control unit 211 is a functional configuration that controls registration of various types of information in the P2P database 221. For example, in a case where the purpose information and the method information are set, the registration control unit 211 registers these pieces of information provided from the information providing apparatus 100 in the P2P database 221.

Furthermore, the registration control unit 211 may control the registration of the learning history information including the learning situation or the like (for example, the progress situation in the learning course, or the like) of the user in the P2P database 221. For example, the registration control unit 211 registers the learning history information provided from the information providing apparatus 100 in the P2P database 221. Note that the information that the registration control unit 211 registers in the P2P database 221 and a case where the registration control unit 211 registers the information are not limited to those described above. For example, the registration control unit 211 may register the job history information, the behavior history information, the purchase history information, or the like, other than the learning history information in the P2P database 221.

### (Acquiring unit 212)

The acquiring unit 212 is a functional configuration that acquires various types of information from the P2P database 221. For example, when providing the online information to the user, the acquiring unit 212 acquires the purpose information, the method information, and the history information of the user from the P2P database 221. Note that the information that the acquiring unit 212 acquires from the P2P database 221 and a case where the acquiring unit 212 acquires the information from the P2P database 221 are not limited to that described above. The acquiring unit 212 provides the acquired information to the communication unit 230 to enable transmission of these pieces of information to the information providing apparatus 100.

### (Storage unit 220)

The storage unit 220 is a functional configuration that stores various types of information. For example, the storage unit 220 stores programs, parameters, or the like used by each functional configuration of the node apparatus 200. Note that a content of the information stored in the storage unit 220 is not limited to those described above.

### (P2P database 221)

The P2P database 221 is a database that is commonly held by each node apparatus 200, and is, for example, blockchain data. As described above, the purpose information, the method information, and the history information or the like (for example, the learning history information, the job history information, the behavior history information, the purchase history information, or the like) of the user are registered in the P2P database 221. The various types of information registered in the P2P database 221 may be added with an electronic signature using an encryption key or may be encrypted using an encryption key. Note that the information registered in the P2P database 221 is not limited to those described above.

### (P2P database program 222)

The P2P database program 222 is a predetermined program that is provided in the P2P database 221 and is executed on the P2P database 221. By using the P2P database program 222, for example, various types of processing other than a transaction of a virtual currency such as Bitcoin and the like is realized while maintaining consistency according to a predetermined rule. Furthermore, by providing the P2P database program 222 in the P2P database 221, a risk that the P2P database program will be illegally altered is reduced. The P2P database program 222 is a chain code in Hyperledger, but is not limited thereto. For example, the P2P database program 222 may refer to a smart contract.

The P2P database program 222 can realize general processing performed on the P2P database 221. For example, the P2P database program 222 can realize acquisition processing of the various types of information, registration processing of the various types of information, and the like, performed by accessing the P2P database 221. Note that the processing realized by the P2P database program 222 is not limited to those described above. A development language of the P2P database program 222, the number of P2P database programs 222 provided in the P2P database 221, or the like, is not particularly limited.

### (Communication unit 230)

The communication unit 230 is a functional configuration that controls various communications with the information providing apparatus 100 and the other node apparatuses 200. For example, in a case where the purpose information and the method information are set, the communication unit 230 receives these pieces of information from the information providing apparatus 100. Furthermore, when providing the online information to the user, the communication unit 230 transmits the purpose information, the method information, and the history information of the user acquired from the P2P database 221 to the information providing apparatus 100. Furthermore, in a case where various history information is generated by the information providing apparatus 100, the communication unit 230 receives the various history information from the information providing apparatus 100. Note that information transmitted and received by the communication unit 230 and a case where the communication unit 230 performs communication are not limited to those described above.

The functional configuration example of the node apparatus 200 has been described hereinabove. Note that the functional configuration described above with reference to Fig. 6 is only an example, and the functional configuration of the node apparatus 200 is not limited to such an example. For example, the node apparatus 200 may not necessarily include all of the function configurations shown in Fig. 6. Furthermore, the functional configuration of the node apparatus 200 can be flexibly modified according to specifications or operations.

### (2.5. Functional configuration example of user apparatus 300)

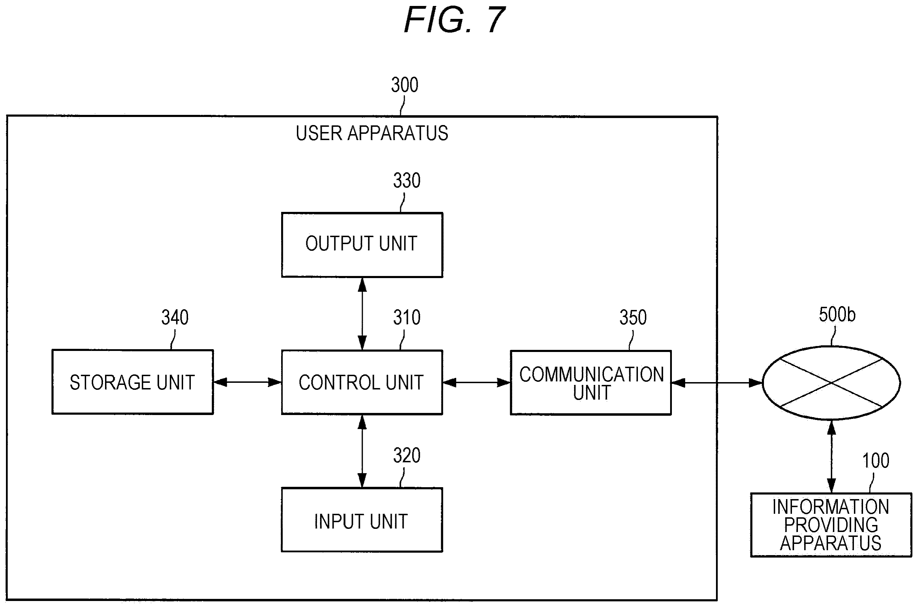

The functional configuration example of the node apparatus 200 has been described hereinabove. Next, a functional configuration example of the user apparatus 300 will be described with reference to Fig. 7.

As shown in Fig. 7, the user apparatus 300 includes a control unit 310, an input unit 320, an output unit 330, a storage unit 340, and a communication unit 350.

### (Control unit 310)

The control unit 310 is a functional configuration that comprehensively controls general processing performed by the user apparatus 300. For example, the control unit 310 can control start or stop of each configuration including the output unit 330 such as a display, a speaker, or the like, on the basis of input performed by the user using the input unit 320, the control information received from the information providing apparatus 100 through the communication unit 350, or the like. Note that a control content of the control unit 310 is not limited to those described above. For example, the control unit 310 may control processing generally performed in various servers, general-purpose computers, PCs, tablet PCs, and the like.

### (Input unit 320)

The input unit 320 is a functional configuration that receives the input from the user. For example, the input unit 320 includes an input means such as a mouse, a keyboard, a touch panel, a button, a switch, a microphone, or the like, and the user can perform the setting of the purpose information or the method information, the learning using the online information, and the like, by using these input means. The input unit 320 provides an input content to the control unit 310. Note that the input means provided in the input unit 320 is not particularly limited.

### (Output unit 330)

The output unit 330 is a functional configuration that outputs various types of information. For example, the output unit 330 includes a display means such as a display or the like, a voice output means such as a speaker or the like, and displays the online information or the like on the display or the like or outputs the online information or the like as voice by the speaker or the like on the basis of control of the control unit 310. Note that the output means provided in the output unit 330 is not particularly limited.

### (Storage unit 340)

The storage unit 340 is a functional configuration that stores various types of information. For example, the storage unit 340 stores the purpose information, the method information, the history information of the user, the online information, or the like, or stores programs, parameters, or the like used by each functional configuration of the user apparatus 300. Note that the information stored in the storage unit 340 is not limited to those described above.

### (Communication unit 350)

The communication unit 350 is a functional configuration that controls various communications with the information providing apparatus 100. For example, in a case where the purpose information and the method information are set, the communication unit 350 transmits these pieces of information to the information providing apparatus 100. Furthermore, when the user performs the learning using the online information, the communication unit 350 receives the online information and the control information used for providing the online information from the information providing apparatus 100. Note that information transmitted and received by the communication unit 350 and a case where the communication unit 350 performs communication are not limited to those described above.

The functional configuration example of the user apparatus 300 has been described hereinabove. Note that the functional configuration described above with reference to Fig. 7 is only an example, and the functional configuration of the user apparatus 300 is not limited to such an example. For example, the user apparatus 300 may not necessarily include all of the functional configurations shown in Fig. 7. Furthermore, the functional configuration of the user apparatus 300 can be flexibly modified according to specifications or operations.

### (2.6. Flow of processing)

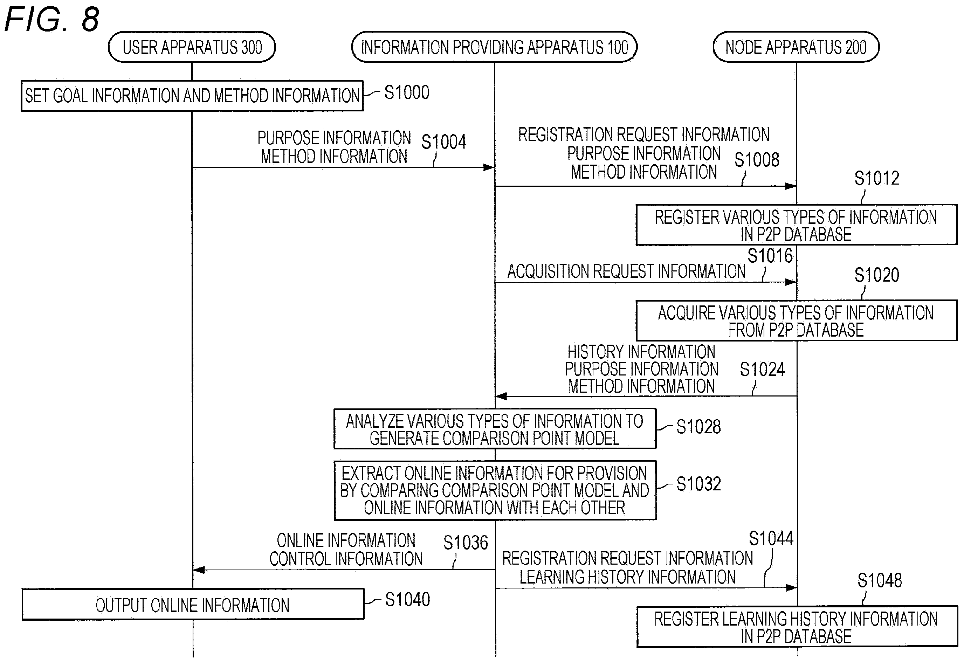

The functional configuration example of the user apparatus 300 has been described hereinabove. Next, a flow of processing by each apparatus will be described with reference to Fig. 8. Fig. 8 is a flowchart showing an example of a flow of processing of providing the online information to the user.

First, as advance preparation for the learning using the online information, in step S1000, the user sets the purpose information and the method information by operating the input unit 320 of the user apparatus 300. In step S1004, the communication unit 350 transmits the purpose information and the method information to the information providing apparatus 100. In step S1008, the registration control unit 111 of the information providing apparatus 100 generates registration request information for requesting registration of the purpose information and the method information in the P2P database 221, and the communication unit 130 transmits these pieces of information to the node apparatus 200. In step S1012, the registration control unit 211 of the node apparatus 200 registers the purpose information and the method information in the P2P database 221.

Next, at the time of performing the learning using the online information, in step S1016, the acquiring unit 112 of the information providing apparatus 100 generates the acquisition request information for requesting the acquisition of the purpose information, the method information, and the history information of the user stored in the P2P database 221, and the communication unit 130 transmits the acquisition request information to the node apparatus 200. In step S1020, the acquiring unit 212 of the node apparatus 200 acquires the purpose information, the method information, and the history information of the user from the P2P database 221. In step S1024, the communication unit 230 transmits these pieces of information to the information providing apparatus 100.

In step S1028, the comparison point model generating unit 113a of the information providing apparatus 100 generates the comparison point model by analyzing the purpose information, the method information, and the history information of the user provided from the node apparatus 200. In step S1032, the online information analyzing unit 113b extracts the information that can be compared with the comparison point model by analyzing the online information, and compares the extracted information and the comparison point model with each other to calculate the similarity between the extracted information and the comparison point model. Then, the online information analyzing unit 113b extracts the online information having the feature whose similarity with the comparison point model is greater than the predetermined value as online information for provision, and adds predetermined label information to the online information.

In step S1036, the provision control unit 114 determines online information to be provided to the user on the basis of the label information and generates the online information and control information used for providing the online information, and the communication unit 130 transmits these pieces of information to the user apparatus 300. In step S1040, the control unit 310 of the user apparatus 300 controls the output unit 330 such as the display, the speaker or the like on the basis of the control information to realize the output of the online information.

In step S1044, the registration control unit 111 of the information providing apparatus 100 generates the registration request information for requesting the registration of the learning history information including the learning situation or the like (for example, the progress situation in the learning course, or the like) of the user in the P2P database 221, and the communication unit 130 transmits these pieces of information to the node apparatus 200. In step S1048, the registration control unit 211 of the node apparatus 200 registers the learning history information provided from the information providing apparatus 100 in the P2P database 221, such that a series of processing ends.

Note that each step in the flowchart shown in Fig. 8 does not necessarily need to be processed in time series in the order described. In other words, each step in the flowcharts may be processed in order different from the order described or may be processed in parallel.

### <3. Modification>

The flow of processing by each apparatus has been described hereinabove. Next, a modification of the present disclosure will be described.

### (3.1. Application to system other than learning system)

As described above, the present disclosure may be applied to any system other than the learning system. Therefore, a case where the present disclosure is applied to a sales promotion system will hereinafter be described as an example.

For example, it is assumed that an information providing apparatus 100 according to a modification is an information processing apparatus that provides online information for promoting sales of an arbitrary product or service and a user apparatus 300 according to a modification is an information processing apparatus that is used by a business target person of the product or the like. Then, the information providing apparatus 100 controls the provision of the online information for promoting sales to the user apparatus 300 on the basis of the purpose information, the method information, and the history information of the user.

Here, the purpose information according to the modification includes, for example, information (for example, details, a goal sales amount, a goal sales number, a goal schedule, or the like, of the arbitrary product or the like) regarding a business purpose (or a business goal) of the arbitrary product or the like, and can be set by a business person. Note that contents and a setter of the purpose information are not limited to those described above. For example, the purpose information may be set by the business target person.

Furthermore, the method information according to the modification includes, for example, a kind (for example, new open-up business, existing customer business, competition comparison-type business (a method of comparing a target product with a competition product and then doing business for the target product), problem posing-type business (a method of posing a problem and then doing business for a target product that solves the problem), repetitive business (a method of repeatedly doing business for the same user plural times), or the like) of arbitrary business method, and details (for example, with respect to the competition comparison-type business, a name of the competition product, a content to be compared, and the like) of each business method, and can be set by the business person. Note that contents and a setter of the method information are not limited to those described above. For example, the method information may be set by the business target person or may be predetermined according to a product or the like. Note that the other contents are similar to of the embodiment described above, and a description thereof is thus omitted.

According to the modification, the information providing apparatus 100 can provide more suitable online information to the business target person in order to sell the arbitrary product or the like. More specifically, the information providing apparatus 100 can provide more suitable online information to the business target person in more suitable order and timing without causing the business person to search for online information suitable for business, of a lot of online information, and can thus realize efficient business. In other words, the information providing apparatus 100 can provide the online information to the user in synchronization with the goal schedule or the like.

Similarly to that described above, the present disclosure can be applied to an arbitrary system to provide more suitable online information to the user in order to achieve an arbitrary purpose.

### (3.2. Provision of online information by P2P database program 222)

Hereinabove, the information providing apparatus 100 has controlled the provision of the online information. Here, in the modification, the P2P database program 222 of the node apparatus 200 may control the provision of the online information.

More specifically, the P2P database program 222 generates a comparison point model on the basis of the purpose information, the method information, and the history information of the user registered in the P2P database 221. Then, the P2P database program 222 may compare the comparison point model with a plurality of pieces of online information to extract online information having a feature that is similar to the comparison point model (has a similarity greater than a predetermined value) as online information for provision, and provides the extracted online information to the user apparatus 300. Note that, in this case, it is assumed that the node apparatus 200 acquires online information used for processing by an arbitrary method.

According to the modification, provision processing of the online information can be automated by the P2P database program 222. Furthermore, the P2P database program 222 has tamper resistance, and can thus prevent tampering of the information (for example, the comparison point model, a provision history of the online information, or the like) output by a series of processing. Note that the P2P database program 222 may realize various variations of processing described above.

### <4. Hardware Configuration Example>

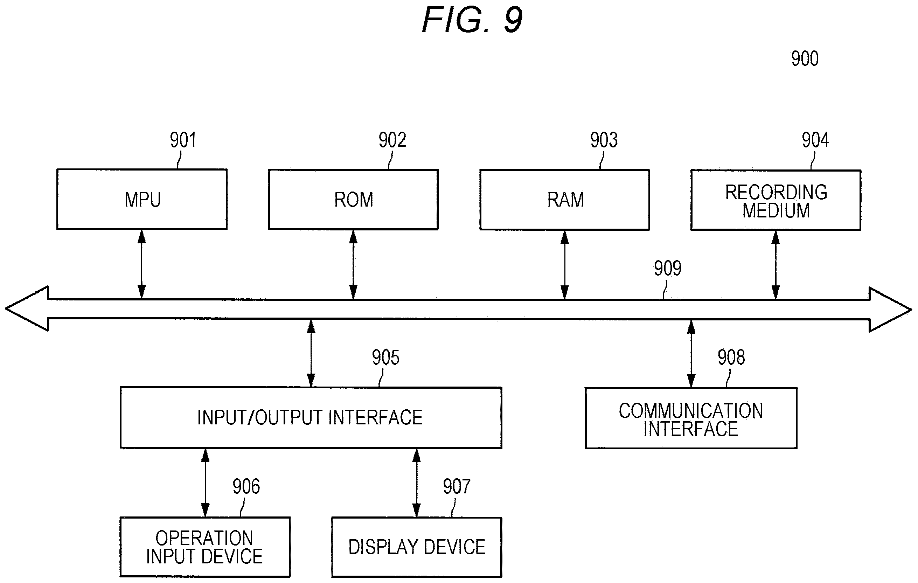

The modification of the present disclosure has been described hereinabove. Next, a hardware configuration of each apparatus will be described with reference to Fig. 9.

Fig. 9 is a block diagram showing an example of a hardware configuration of the information providing apparatus 100, the node apparatus 200, or the user apparatus 300. The information providing apparatus 100, the node apparatus 200, or the user apparatus 300 can be embodied by an information processing apparatus 900 shown in Fig. 9.

The information processing apparatus 900 includes, for example, an MPU 901, a ROM 902, a RAM 903, a recording medium 904, an input/output interface 905, an operation input device 906, a display device 907, and a communication interface 908. Furthermore, the information processing apparatus 900 connects each component by a bus 909 as a data transmission path, for example.

The MPU 901 includes, for example, one or two or more processors, various processing circuits, or the like including an arithmetic circuit such as an MPU or the like, and functions as the control unit 110 of the information providing apparatus 100, the control unit 210 of the node apparatus 200, or the control unit 310 of the user apparatus 300. Note that the control unit 110 of the information providing apparatus 100, the control unit 210 of the node apparatus 200, or the control unit 310 of the user apparatus 300 may include a dedicated (or general-purpose) circuit (for example, a processor or the like separate from the MPU 901) capable of realizing the various types of processing described above.

The ROM 902 stores control data or the like such as programs, operation parameters, or the like used by the MPU 901. The RAM 903 temporarily stores, for example, programs or the like executed by the MPU 901.

The recording medium 904 functions as the storage unit 120 of the information providing apparatus 100, the storage unit 220 of the node apparatus 200, or the storage unit 340 of the user apparatus 300, and stores various data such as data, various programs, or the like regarding information processing according to the present embodiment, such as, for example, the online information, the purpose information, the method information, the history information of the user, or the like. Here, examples of the recording medium 904 can include a magnetic recording medium such as a hard disk or the like and a nonvolatile memory such as a flash memory or the like. Furthermore, the recording medium 904 may be detachable from the information processing apparatus 900.

The input/output interface 905 connects, for example, the operation input device 906 or the display device 907. Here, examples of the input/output interface 905 can include a universal serial bus (USB) terminal, a digital visual interface (DVI) terminal, a high-definition multimedia interface (HDMI) (registered trademark) terminal, various processing circuits, and the like.

Furthermore, the operation input device 906 is provided, for example, on the information processing apparatus 900, and is connected to the input/output interface 905 inside the information processing apparatus 900. Examples of the operation input device 906 can include a keyboard, a mouse, a keypad, a touch panel, a microphone, an operation button, a rotary selector such as a direction key, a jog dial, or the like, or a combination thereof. The operation input device 906 functions as the input unit 320 of the user apparatus 300.

Furthermore, the display device 907 is provided, for example, on the information processing apparatus 900, and is connected to the input/output interface 905 inside the information processing apparatus 900. Examples of the display device 907 can include a liquid crystal display, an organic electro-luminescence (EL) display, or the like. The display device 907 functions as the output unit 330 of the user apparatus 300.

Note that it goes without saying that the input/output interface 905 can also be connected to an external device such as an external operation input device, an external display device, or the like of the information processing apparatus 900. Furthermore, the display device 907 may be a device capable of display and user operation, such as, for example, a touch panel or the like.

The communication interface 908 is a communication means that is included in the information processing apparatus 900, and functions as the communication unit 130 of the information providing apparatus 100, the communication unit 230 of the node apparatus 200, or the communication unit 350 of the user apparatus 300. Furthermore, the communication interface 908 may have a function of performing wireless or wired communication with an arbitrary external apparatus such as, for example, a server or the like through an arbitrary network (or directly). Here, examples of the communication interface 908 can include a communication antenna and a radio frequency (RF) circuit (wireless communication), an IEEE802.15.1 port and a transmission/reception circuit (wireless communication), an IEEE802.11 port and a transmission/reception circuit (wireless communication), a local area network (LAN) terminal and a transmission/reception circuit (wired communication), or the like.

Note that the hardware configuration of the information processing apparatus 900 is not limited to the configuration shown in Fig. 9. For example, the information processing apparatus 900 may not include the communication interface 908 in a case where the information processing apparatus 900 performs communication through an external communication device to which the information processing apparatus 900 is connected. Furthermore, the communication interface 908 may be a configuration that can perform communication in a plurality of communication manners Furthermore, the information processing apparatus 900 may not include, for example, the operation input device 906, the display device 907, or the like. Furthermore, for example, some or all of the configurations shown in Fig. 9 may be realized by one or more integrated circuits (ICs).

### <5. Summary>

As described above, the information processing system according to the present disclosure can provide more suitable online information to the user in more suitable order and timing in order to achieve the arbitrary purpose, on the basis of the purpose information regarding the arbitrary purpose, the method information regarding the method of achieving the arbitrary purpose, and the history information of the user.

Hereinabove, the preferred embodiments of the present disclosure have been described in detail with reference to the accompanying drawings, but the technical scope of the present disclosure is not limited to such embodiments. It will be apparent to those skilled in the art of the present disclosure that various modifications or alterations can be conceived within the scope of the technical idea described in the claims, and it is naturally understood that these modifications or alterations also fall within the technical scope of the present disclosure.

Furthermore, the effects described in the present specification are only illustrative or exemplary rather than being restrictive. That is, the technology according to the present disclosure can accomplish other effects apparent to those skilled in the art from the description of the present specification, in addition to or instead of the effects described above.

Note that the following configurations also fall within the technical scope of the present disclosure.
(1) An information processing apparatus including:
   an acquiring unit that acquires information regarding an arbitrary purpose and history information of a user registered in a P2P database; and
   a control unit that controls provision of online information to the user on the basis of the information regarding the purpose and the history information.
(2) The information processing apparatus according to the above (1), in which
   the control unit supports achievement of the purpose by the user by controlling the provision of the online information to the user.
(3) The information processing apparatus according to the above (2), in which
   the acquiring unit also acquires information regarding a method of achieving the purpose, and
   the control unit controls the provision of the online information on the basis of the information regarding the method.
(4) The information processing apparatus according to the above (3), in which
   the information regarding the purpose or the information regarding the method is registered in the P2P database.
(5) The information processing apparatus according to the above (4), in which
   the control unit controls the provision of the online information using a predetermined program provided in the P2P database and executed on the P2P database.
(6) The information processing apparatus according to any one of the above (1) to (5), in which
   the control unit generates feature information of online information suitable for provision on the basis of the information regarding the purpose and the history information, and controls the provision of the online information on the basis of the feature information.
(7) The information processing apparatus according to any one of the above (1) to (6), in which
   the information regarding the purpose is information regarding a learning course, and includes information regarding a topic, learning order, or a schedule of the learning course.
(8) The information processing apparatus according to the above (7), in which
   the history information includes learning history information, job history information, behavior history information, or purchase history information, and
   the learning history information includes information regarding a progress situation in the learning course.
(9) The information processing apparatus according to any one of the above (1) to (8), in which
   the online information includes news information, blog information, paper information, or arbitrary information in social media disclosed on the Internet.
(10) The information processing apparatus according to any one of the above (1) to (9), in which
   the P2P database is blockchain data.
(11) An information processing method executed by a computer, including:
   acquiring information regarding an arbitrary purpose and history information of a user registered in a P2P database; and
   controlling provision of online information to the user on the basis of the information regarding the purpose and the history information.
(12) A program for causing a computer to realize:
   acquiring information regarding an arbitrary purpose and history information of a user registered in a P2P database; and
   controlling provision of online information to the user on the basis of the information regarding the purpose and the history information.

### REFERENCE SIGNS LIST

- 100: Information providing apparatus
- 110: Control unit
- 111: Registration control unit
- 112: Acquiring unit
- 113: Analyzing unit
- 113a: Comparison point model generating unit
- 113b: Online information analyzing unit
- 114: Provision control unit
- 120: Storage unit
- 121: Online information storage unit
- 130: Communication unit
- 200: Node apparatus
- 210: Control unit
- 211: Registration control unit
- 212: Acquiring unit
- 220: Storage unit
- 221: P2P database
- 222: P2P database program
- 230: Communication unit
- 300: User apparatus
- 310: Control unit
- 320: Input unit
- 330: Output unit
- 340: Storage unit
- 350: Communication unit
- 400: P2P network
- 500: Network

## Claims

1. An information processing apparatus comprising:
an acquiring unit that acquires information regarding an arbitrary purpose and history information of a user registered in a P2P database; and
a control unit that controls provision of online information to the user on a basis of the information regarding the purpose and the history information.

2. The information processing apparatus according to claim 1, wherein
the control unit supports achievement of the purpose by the user by controlling the provision of the online information to the user.

3. The information processing apparatus according to claim 2, wherein
the acquiring unit also acquires information regarding a method of achieving the purpose, and
the control unit controls the provision of the online information on a basis of the information regarding the method.

4. The information processing apparatus according to claim 3, wherein
the information regarding the purpose or the information regarding the method is registered in the P2P database.

5. The information processing apparatus according to claim 4, wherein
the control unit controls the provision of the online information using a predetermined program provided in the P2P database and executed on the P2P database.

6. The information processing apparatus according to claim 1, wherein
the control unit generates feature information of online information suitable for provision on a basis of the information regarding the purpose and the history information, and controls the provision of the online information on a basis of the feature information.

7. The information processing apparatus according to claim 1, wherein
the information regarding the purpose is information regarding a learning course, and includes information regarding a topic, learning order, or a schedule of the learning course.

8. The information processing apparatus according to claim 7, wherein
the history information includes learning history information, job history information, behavior history information, or purchase history information, and
the learning history information includes information regarding a progress situation in the learning course.

9. The information processing apparatus according to claim 1, wherein
the online information includes news information, blog information, paper information, or arbitrary information in social media disclosed on an Internet.

10. The information processing apparatus according to claim 1, wherein
the P2P database is blockchain data.

11. An information processing method executed by a computer, comprising:
acquiring information regarding an arbitrary purpose and history information of a user registered in a P2P database; and
controlling provision of online information to the user on a basis of the information regarding the purpose and the history information.

12. A program for causing a computer to realize:
acquiring information regarding an arbitrary purpose and history information of a user registered in a P2P database; and
controlling provision of online information to the user on a basis of the information regarding the purpose and the history information.
